# FASCICULE DE BREVET EUROPEEN

(11) **EP 3 476 691 B1**
(45) Date de publication et mention de la délivrance du brevet: **05.05.2021**
(21) Numéro de dépôt: 18203810.9
(22) Date de dépôt: 31.10.2018
(51) Int. Cl.: B62B 5/08, B62B 1/12, B62B 5/00, B62B 5/04, A47C 1/14, A47C 7/66

(54) **CHARIOT DE PLAGE TOUT-EN-UN**
ALL-IN-ONE-STRANDWAGEN
ALL-IN-ONE BEACH TROLLEY

(30) Priorité: 31.10.2017 FR 1760283
(43) Date de publication de la demande: 01.05.2019
(73) Titulaire: CJB Revolution, 31320 Vieille-Toulouse (FR)
(72) Inventeur: CHAPUS, Charles, 31320 Toulouse (FR)
(74) Mandataire: Lavoix

(56) Documents cités:
- WO-A1-97/00802
- DE-B3- 10 317 630
- US-A- 2 620 021
- US-A1- 2006 279 052

## Description

La présente invention concerne un chariot de plage.

Un chariot de plage comporte habituellement un bâti sur roulettes, et permet de transporter des charges lourdes ou encombrantes, tels qu'une glacière, sur une plage.

DE 103 17 630 et US 2 620 021 décrivent des exemples de chariots de plage connus.

La présente invention a notamment pour but de perfectionner un tel chariot de plage, pour le rendre aussi pratique et fonctionnel que possible.

A cet effet, l'invention a notamment pour objet un chariot de plage selon la revendication 1.

En intégrant le parasol au chariot de plage, il n'est plus nécessaire de le transporter en plus du chariot de plage.

Un chariot de plage selon l'invention peut comporter en outre l'une ou plusieurs des caractéristiques suivantes, prises seules ou selon toutes combinaisons techniquement envisageables :
- Les premières liaisons pivot relient les premières extrémités des arceaux au bâti, notamment à une poignée télescopique portée par le bâti.
- Le chariot de plage comporte au moins un élément de siège solidarisé, de manière non amovible, au bâti, l'élément de siège étant manœuvrable entre une position escamotée de rangement et une position déployée d'utilisation.
- Les secondes liaisons pivot relient les secondes extrémités des arceaux à l'au moins un élément de siège.
- le chariot de plage comporte deux éléments de siège portés latéralement de part et d'autre du bâti ;
- le chariot de plage comprend une glacière logée dans le bâti ;
- le bâti comporte un compartiment de rangement d'objets ;
- chaque élément de siège comporte une structure gonflable, dégonflée en position de rangement et gonflée en position d'utilisation ;
- le chariot de plage comporte des moyens de gonflage, notamment un compresseur à air, reliés à la structure gonflable de chaque élément de siège, et logés dans le bâti ;
- le parasol comporte une poignée de préhension à son extrémité supérieure ;
- le bâti comporte au moins un élément d'ancrage dans du sable, par exemple un pieu muni d'une cannelure hélicoïdale de vissage ;
- l'élément d'ancrage est formé par une extrémité inférieure du parasol ;
- le chariot de plage comporte au moins un équipement électrique, et une batterie d'alimentation de l'équipement électrique ;
- le chariot de plage comporte au moins un panneau solaire pour le rechargement de la batterie.

L'invention sera mieux comprise à la lecture de la description qui va suivre, donnée uniquement à titre d'exemple et faite en se référant aux figures annexées, parmi lesquelles :
- la figure 1 est une vue schématique de devant et en perspective d'un chariot de plage selon un premier exemple non revendiqué de mode de réalisation en configuration déployée ;
- la figure 2 est une vue similaire à la figure 1, du chariot de plage de la figure 1 en configuration rétractée ;
- la figure 3 une vue schématique de derrière et en perspective d'un détail du chariot de plage de la figure 1 ;
- la figure 4 est une vue en perspective d'un chariot de plage selon un deuxième exemple de mode de réalisation de l'invention, en configuration déployée,
- la figure 5 est une vue en perspective du chariot de plage de la figure 4, en configuration rétractée.

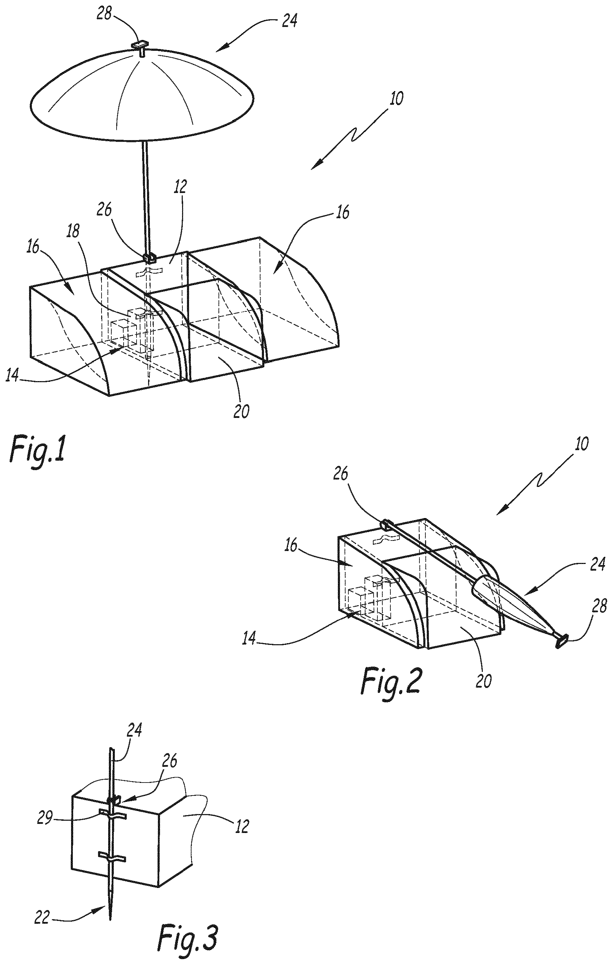

On a représenté sur les figures 1 à 3 un chariot de plage 10 non revendiqué, respectivement en configuration déployée (figure 1) et en configuration rétractée (figure 2).

Le chariot de plage 10 comporte un bâti 12 sous la forme d'un caisson, monté sur des roulettes 14 facilitant le déplacement du chariot de plage 10. Par exemple, le bâti 12 comporte deux roulettes, agencées latéralement de part et d'autre de ce bâti 12.

Le chariot de plage 10 comporte au moins un élément de siège 16, porté par le bâti 12. Dans l'exemple décrit, le chariot de plage 10 comporte deux éléments de siège 16, agencés latéralement de part et d'autre du bâti 12.

L'élément de siège 16 est par exemple un transat, mais pourrait en variante ne comporter qu'un dossier sans assise, ou qu'une assise sans dossier.

Dans tous les cas, chaque élément de siège 16 est manœuvrable entre une position escamotée de rangement (figure 2) et une position déployée d'utilisation (figure 1).

Plus particulièrement, en position d'utilisation, l'élément de siège 16 est utilisable par un utilisateur, qui peut notamment l'utiliser pour s'assoir. En revanche, en position de rangement, l'élément de siège 16 est escamoté dans ou sur le bâti, c'est-à-dire que le chariot de plage 10 présente un encombrement égal, ou légèrement supérieure, à celui du bâti seul lorsque l'élément de siège 16 est en position de rangement.

Divers mécanismes de manœuvre de l'élément de siège 16 sont envisageables.

Par exemple, chaque élément de siège 16 comporte une structure gonflable, dégonflée en position de rangement et gonflée en position d'utilisation. Lorsque l'élément de siège 16 est dégonflé, il peut alors être rangé dans un logement prévu à cet effet dans le bâti 12.

Avantageusement, le chariot de plage 10 comporte des moyens de gonflage 18, notamment un compresseur à air, reliés à la structure gonflable de chaque élément de siège 16, et logés dans le bâti 12. Ainsi, dans ce cas, le gonflage des éléments de siège 16 est automatique, après actionnement d'une commande d'activation des moyens de gonflage.

De préférence, les moyens de gonflage 18 sont réversibles, pour permettre également le dégonflage automatique des éléments de siège 16. Avantageusement, des moyens élastiques sont prévus pour rétracter les éléments de sièges 16 dans leur logement respectif lors de leur dégonflage.

Les moyens de gonflage 18 peuvent de manière optionnelle comporter une sortie qui n'est pas liée aux éléments de siège 16, pour permettre le gonflage ou le dégonflage d'éléments extérieures, tels que des bouées, des canots gonflables ou autre.

En variante, l'élément de siège 16 peut être gonflé manuellement, par exemple au moyen d'une pompe extérieure.

De manière alternative, tout autre mécanisme de manœuvre de l'élément de siège sont envisageables.

Par exemple, l'élément de siège 16 peut être pliable, auquel cas le mécanisme de manœuvre peut comporter des vérins assurant le pliage et le dépliage de l'élément de siège 16.

Conformément à un autre exemple, l'élément de siège peut être simplement rabattable contre le bâti 12.

Conformément à un autre exemple, l'élément de siège peut être monté sur des rails et ainsi déplaçable en translation depuis un logement du bâti 12 vers sa position déployée.

Le chariot de plage 10 est de préférence destiné à porter de nombreuses autres fonctionnalités, de manière à permettre à un utilisateur de transporter tous les équipements dont il pourrait avoir besoin.

Ainsi, le chariot de plage 10 décrit comprend une glacière 20 logée dans le bâti. Par « glacière », on entend tout équipement propre à maintenir son intérieur au froid. A titre d'exemple, la glacière 20 peut être un mini réfrigérateur.

Avantageusement, le bâti 12 comporte également au moins un compartiment de rangement d'objets. Ce compartiment peut par exemple être utilisé pour ranger des gobelets ou verres, divers couverts, de la nourriture, ou tout autre objet pour son utilisation sur la plage (livres, magasines, stylos...). Plusieurs compartiments séparés peuvent être envisagés, chacun pour recevoir un type d'objet respectif.

Afin d'immobiliser le chariot de plage 10 lors de son utilisation, ce chariot de plage 10 comporte avantageusement au moins un élément 22 d'ancrage dans le sable. Par exemple, l'élément d'ancrage 22 est formé par un pieu, et de préférence par un pieu muni d'une cannelure hélicoïdale de vissage, facilitant la pénétration du pieu dans le sable.

Conformément au mode de réalisation décrit, le chariot de plage 10 comporte un parasol 24. Par exemple, le parasol 24 est relié au bâti 12 par une liaison pivot 26 d'axe parallèle à un axe des roulettes 14. Ainsi, le parasol 24 est manoeuvrable entre une position déployée d'utilisation (représentée sur la figure 1), et une position repliée de rangement (représentée sur la figure 2).

Avantageusement, le parasol 24 est télescopique, ce qui permet de présenter un encombrement minimal en position repliée. Plus particulièrement, la longueur du parasol 24 replié est légèrement supérieure à celle du bâti 12.

De préférence, le parasol 24 comporte une poignée 28 de préhension à son extrémité supérieure. Ainsi, cette poignée de préhension 28 peut être utilisée, lorsque le parasol 24 est en position repliée, pour tirer le chariot de plage 10.

Dans un mode de réalisation préféré, l'élément d'ancrage 22 est formé par une extrémité inférieure du parasol 24. Dans ce cas, cet élément d'ancrage 22 est relié de manière télescopique au reste du parasol 24, de manière à être escamoté dans le parasol 24 en position repliée. Le bâti 12 comporte par ailleurs des éléments 29 de maintien et de guidage de l'élément d'ancrage 22, dans lesquels l'élément d'ancrage 22 coulisse.

Avantageusement, le chariot de plage 10 comporte par ailleurs au moins un équipement électrique, et une batterie d'alimentation de l'équipement électrique.

L'équipement électrique est par exemple un équipement audio, permettant de diffuser de la musique. En variante, ou de manière supplémentaire, un équipement électrique est formé par la glacière 20 sous forme de mini-réfrigérateur.

La batterie d'alimentation est par exemple rechargeable au moyen d'au moins un panneau solaire porté par le chariot de plage 10. De préférence, le panneau solaire est porté par le parasol 24.

En variante, ou de manière complémentaire, la batterie d'alimentation est rechargeable en la branchant sur le secteur.

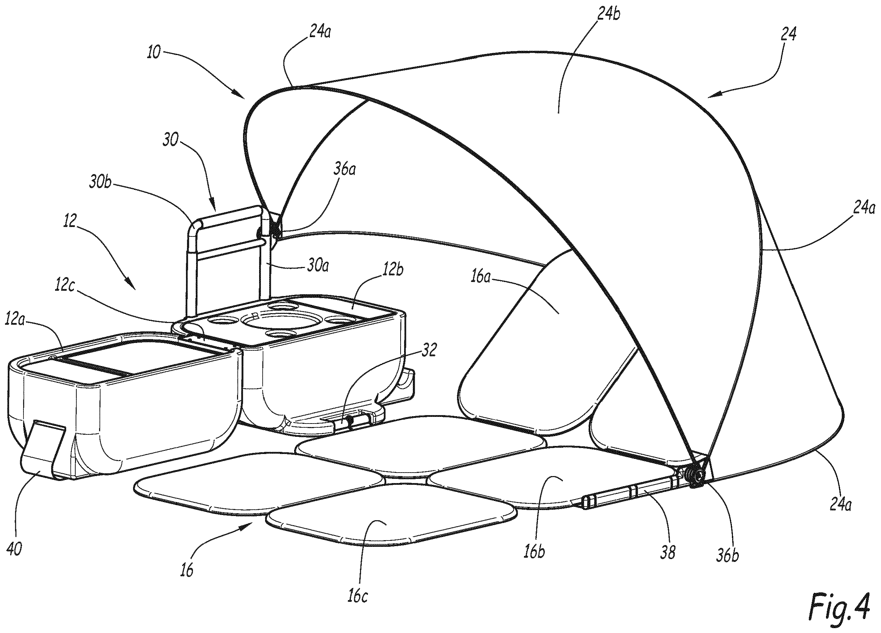

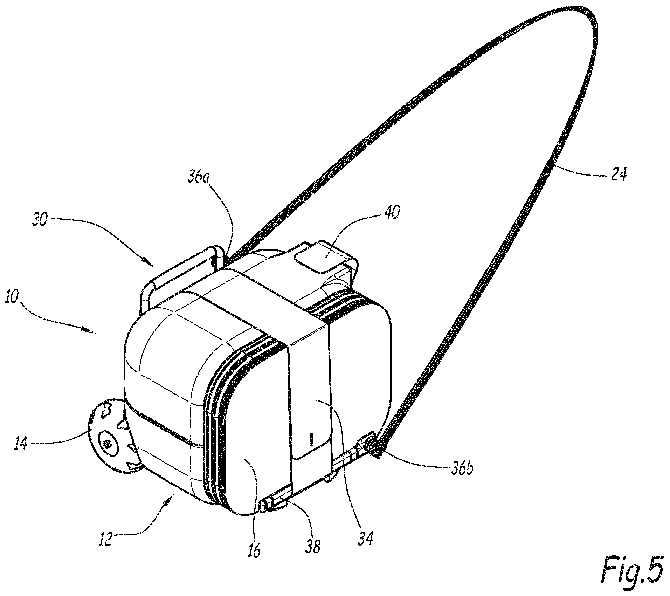

On a représenté, sur les figures 4 et 5, un chariot de plage 10 selon l'invention. Sur ces figures, les éléments analogues à ceux des figures précédentes sont désignés par des références identiques. Le chariot de plage 10 est représenté respectivement en configuration déployée (figure 4) et en configuration rétractée (figure 5).

Le chariot de plage 10 comporte un bâti 12 sous la forme d'un caisson, monté sur des roulettes 14 facilitant le déplacement du chariot de plage 10. Par exemple, le bâti 12 comporte deux roulettes, agencées latéralement de part et d'autre de ce bâti 12. On notera que les roulettes 14 présentent des dimensions suffisantes pour permettre de rouler le chariot 10 dans du sable.

Conformément à ce mode de configuration, le bâti 12 comporte deux parties, plus particulièrement une partie supérieure 12a et une partie inférieure 12b, de dimensions similaires, reliées entre elles par une charnière 12c.

En configuration rétractée, la partie supérieure 12a est disposée au-dessus de la partie inférieure 12b. En configuration déployée, la partie supérieure 12a est disposée à côté de la partie inférieure 12b.

L'une des parties, de préférence la partie supérieure 12a, comporte avantageusement au moins un dispositif d'alimentation électrique, par exemple une batterie d'alimentation et/ou un panneau solaire. Le panneau solaire peut être utilisé pour recharger la batterie d'alimentation, ou pour alimenter directement un dispositif électronique. Des moyens de connexion avec un dispositif électronique sont prévus dans la partie supérieure 12a. Il est ainsi possible de connecter un dispositif électronique, par exemple un équipement audio, un smartphone ou tout autre dispositif électronique, à la batterie et/ou au panneau solaire.

L'autre des parties, de préférence la partie inférieure 12b, comporte un logement pour des objets, et/ou une glacière, et/ou un réfrigérateur alimenté par la batterie d'alimentation et/ou le panneau solaire.

Avantageusement, le logement comporte une serrure, permettant d'être fermé à clé, pour que les utilisateurs laissent des objets précieux à l'intérieur en partant se baigner.

La répartition des différents équipements décrits ci-dessus dans les parties 12a, 12b peut être différente dans des variantes de réalisation.

Le bâti 12 comporte par ailleurs une poignée télescopique 30, permettant à un utilisateur de tirer le chariot 10. La poignée télescopique 30 est de préférence portée par la partie inférieure 12B. Elle comporte des tubes inférieurs fixes 30a, et un élément de poignée 30b propre à coulisser de manière telescopique dans les tubes inférieurs fixes 30a.

Le chariot de plage 10 au moins un élément de siège 16, porté par le bâti 12. Dans l'exemple décrit, le chariot de plage 10 comporte deux éléments de siège 16 reliés entre eux.

Chaque élément de siège 16 est manœuvrable entre une position escamotée de rangement (figure 5) et une position déployée d'utilisation (figure 4).

Plus particulièrement, en position d'utilisation, l'élément de siège 16 est utilisable par un utilisateur, qui peut notamment l'utiliser pour s'assoir. En revanche, en position de rangement, l'élément de siège 16 est escamoté en étant replié sur le bâti 12.

Un premier des éléments de siège 16 est relié au bâti 12 de manière non amovible. Par les termes « non amovibles », on entend que l'élément de siège 16 ne peut pas être détaché du bâti 12 lors d'une utilisation normale du chariot 10.

A cet effet, ce premier élément de siège 16 est relié au bâti 12 par une liaison pivot 32, agencée à l'avant du bâti 12, à l'opposé de la poignée 30. La liaison pivot 32 est par exemple portée par la partie inférieure 12b du bâti 12.

Le second élément de siège 16 est relié au premier élément de siège de manière non amovible, notamment par au moins une charnières.

Chaque élément de siège 16 comporte une pluralité de panneaux, par exemple en mousse, formant l'élément de siège 16 en configuration déployée, et rabattus les uns sur les autres en configuration rétractée.

Plus particulièrement, chaque élément de siège 16 comporte un premier panneau 16a formant un dossier, un second panneau 16b formant une assise, et un troisième panneau 16c destiné à recevoir les jambes d'un utilisateur assis sur l'assise. En variante, l'élément de siège 16 ne comporte pas de dossier et/ou ne comporte pas de troisième panneau.

Chaque premier panneau 16a comporte de préférence un élément de béquille sur une face verso, permettant à ce premier panneau 16a d'être maintenu incliné par rapport au second panneau 16b, comme cela est représenté sur la figure 4.

Le premier panneau 16a de chaque élément de siège 16 est relié au second panneau 16b du même élément de siège 16, de manière non amovible. Le troisième panneau 16c de chaque élément de siège 16 est relié au second panneau 16b du même élément de siège 16, de manière non amovible.

Avantageusement, le chariot 10 comporte un élément 34 de maintien des éléments de siège 16 en configuration rétractée, notamment une bande de maintien, par exemple à velcros. Avantageusement, cette bande de maintien 34 permet également de maintenir les parties supérieure 12a et inférieure 12b du bâti l'une sur l'autre en configuration rétractée.

Le chariot de plage 10 comporte par ailleurs un parasol 24. Dans la présente invention, le terme « parasol » est compris au sens large, comme tout élément permettant de protéger l'utilisateur du soleil.

Conformément à ce second mode de réalisation, le parasol 24 comporte au moins trois arceaux 24a, et au moins une toile 24b s'étendant entre les arceaux 24a.

Les arceaux 24a présentent une forme de repos correspondant à la configuration déployée et peuvent être repliés en configuration rétractée. Les arceaux 24a sont à mémoire de forme, de sorte qu'ils sont rappelés vers leur forme de repos lorsqu'aucune contrainte ne leur est appliquée.

Chaque arceau 24a s'étend entre une première extrémité et une seconde extrémité, les premières extrémités de tous les arceaux étant reliées à des premières liaison pivot 36a toutes articulées autour d'un même premier axe, et les secondes extrémités de tous les arceaux 24a étant reliées à des secondes liaison pivot 36b toutes articulées autour d'un même second axe.

Les premières liaisons pivot 36a relient les premières extrémités des arceaux au bâti 12. Plus particulièrement, dans l'exemple décrit, les premières liaisons pivot 36a sont portées par la poignée télescopique 30, de préférence sur l'un des tubes inférieurs fixes 30a.

Les secondes liaisons pivot 36b relient les secondes extrémités des arceaux 24a à l'au moins un élément de siège 16, et plus particulièrement au second élément de siège. A cet effet, le second panneau 16b du second élément de siège porte un barreau de rigidification 38 portant les secondes laisions pivot 36b. Le barreau de rigidification 38 s'étend le long du second panneau 16b.

La toile 24b est réalisée dans un matériau imperméable aux rayons solaires, notamment dans le même matériau qu'un parasol classique.

Avantageusement, le parasol 24 comporte, dans sa partie inférieure, un boudin propre à être rempli de sable, afin d'assurer sa stabilité.

En variante, ou de manière complémentaire, le parasol comporte des lanières de fixation de sardines propres à être plantées dans le sable.

Comme cela est représenté sur la figure 5, le bâti 12 comporte un élément 40 de maintien des arceaux 24a en configuration repliée. On notera que, par soucis de simplification, les arceaux 24a sont représentés dans une position intermédiaire sur la figure 5.

On notera que l'invention n'est pas limitée au mode de réalisation précédemment décrit, et pourrait présenter diverses variantes complémentaires.

Par exemple, le chariot de plage 10 pourrait comporter d'autres fonctions supplémentaires.

## Revendications

1. Chariot de plage (10), comprenant un bâti (12) monté sur des éléments roulants (14), comportant un parasol (24), solidarisé, de manière non amovible, à au moins un autre élément du chariot de plage (10), le parasol (24) comportant au moins trois arceaux (24a), et au moins une toile (24b) s'étendant entre les arceaux (24a),
**caractérisé en ce que** :
- chaque arceau (24a) s'étend entre une première extrémité et une seconde extrémité, les premières extrémités de tous les arceaux (24a) étant reliées à des premières liaison pivot (36a) toutes articulées autour d'un même premier axe, et les secondes extrémités de tous les arceaux (24a) étant reliées à des secondes liaison pivot (36b) toutes articulées autour d'un même second axe
- chaque arceau (24a) présente une forme de repos correspondant à une configuration déployée et peut être replié en une configuration rétractée, chaque arceau (24a) étant à mémoire de forme, de sorte qu'il est rappelés vers sa forme de repos lorsqu'aucune contrainte ne lui est appliquée.

2. Chariot de plage (10) selon la revendication 1, dans lequel les premières liaisons pivot (36a) relient les premières extrémités des arceaux (24a) au bâti (12), notamment à une poignée télescopique (30) portée par le bâti (12).

3. Chariot de plage (10) selon l'une quelconque des revendications précédentes, comportant au moins un élément de siège (16) solidarisé, de manière non amovible, au bâti (12), l'élément de siège (16) étant manœuvrable entre une position escamotée de rangement et une position déployée d'utilisation.

4. Chariot de plage (10) selon la revendication 3, dans lequel les secondes liaisons pivot (36b) relient les secondes extrémités des arceaux (24a) à l'au moins un élément de siège (16).

5. Chariot de plage (10) selon l'une quelconque des revendications précédentes, comprenant une glacière (20) logée dans le bâti.

6. Chariot de plage (10) selon l'une quelconque des revendications précédentes, dans lequel le bâti (12) comporte au moins un élément (22) d'ancrage dans du sable, par exemple un pieu muni d'une cannelure hélicoïdale de vissage.

7. Chariot de plage (10) selon l'une quelconque des revendications précédentes, comportant au moins un équipement électrique, et une batterie d'alimentation de l'équipement électrique.

8. Chariot de plage (10) selon la revendication 7, comportant au moins un panneau solaire pour le rechargement de la batterie.

## Patentansprüche

1. Strandwagen (10), aufweisend ein an Rollkörpern (14) angebrachtes Gestell (12), mit einem Sonnenschirm (24), der nicht-abnehmbar mit zumindest einem anderen Element des Strandwagens (10) verbunden ist, wobei der Sonnenschirm (24) zumindest drei Bügel (24a) und zumindest ein Tuch (24b) aufweist, das sich zwischen den Bügeln (24a) erstreckt,
**dadurch gekennzeichnet, dass**:
- sich jeder Bügel (24a) zwischen einem ersten Ende und einem zweiten Ende erstreckt, wobei die ersten Enden aller Bügel (24a) an ersten Drehverbindungen (36a) verbunden sind, die alle um dieselbe erste Achse bewegbar sind, und die zweiten Enden aller Bügel (24a) an zweiten Drehverbindungen (36b) verbunden sind, die alle um dieselbe zweite Achse bewegbar sind,
- jeder Bügel (24a) eine Ruheform hat, die einer Entfaltet-Konfiguration entspricht, und in eine Eingezogen-Konfiguration gefaltet werden kann, wobei jeder Bügel (24a) ein Formgedächtnis hat, sodass er in seine Ruheform zurückkehrt, wenn keine Beanspruchung auf ihn ausgeübt wird.

2. Strandwagen (10) nach Anspruch 1, bei dem die ersten Drehverbindungen (36a) die ersten Enden der Bügel (24a) mit dem Gestell (12) verbinden, insbesondere mit einem vom Gestell (12) getragenen Teleskopgriff (30).

3. Strandwagen (10) nach einem der vorhergehenden Ansprüche, aufweisend zumindest ein am Gestell (12) nicht-abnehmbar angebrachtes Sitzelement (16), wobei das Sitzelement (16) zwischen einer Einfahr-Aufbewahrungsposition und einer Ausfahr-Verwendungsposition bewegbar ist.

4. Strandwagen (10) nach Anspruch 3, wobei die zweiten Drehverbindungen (36b) die zweiten Enden der Bügel (24a) mit dem zumindest einen Sitzelement (16) verbinden.

5. Strandwagen (10) nach einem der vorhergehenden Ansprüche, mit einer im Gestell untergebrachten Kühlbox (20).

6. Strandwagen (10) nach einem der vorhergehenden Ansprüche, wobei das Gestell (12) zumindest ein Element (22) zur Verankerung im Sand aufweist, beispielsweise einen mit einer schraubenförmigen Rille versehenen Pfahl.

7. Strandwagen (10) nach einem der vorhergehenden Ansprüche, aufweisend zumindest eine elektrische Ausrüstung und eine Batterie zur Versorgung der elektrischen Ausrüstung.

8. Strandwagen (10) nach Anspruch 7, aufweisend zumindest ein Solarpanel zum Laden der Batterie.

## Claims

1. A beach cart (10) comprising a frame (12) mounted on rolling elements (14), comprising a sun shade (24), integrally secured in a non-detachable manner, to at least one other element of the beach cart (10), the sun shade (24) comprising at least three arches (24a), and at least one fabric sheeting (24b) that extends between the arches (24a),
**characterized in that**:
- each arch (24a) extends between a first end and a second end, the first ends of all the arches (24a) being connected to the first pivot links (36a) all joined in an articulated manner around a same given first axis, and the second ends of all the arches (24a) being connected to the second pivot links (36b) all joined in an articulated manner around a same given second axis
- each arch (24a) has a form of rest corresponding to a deployed configuration and can be folded into a retracted configuration, each arch (24a) having shape retention memory, such that it is returned to its form of rest when no stress is applied to it.

2. A beach cart (10) according to claim 1, wherein the first pivot links (36a) connect the first ends of the arches (24a) to the frame (12), in particular to a telescopic handle (30) carried by the frame (12).

3. A beach cart (10) according to any one of the preceding claims, comprising at least one seat member (16) integrally secured in a non-detachable manner to the frame (12), the seat member (16) being operable between a retracted storage position and an extended use position.

4. A beach cart (10) according to claim 3, wherein the second pivot links (36b) connect the second ends of the arches (24a) to the at least one seat member (16).

5. A beach cart (10) according to any one of the preceding claims, including a cooler (20) housed in the frame.

6. A beach cart (10) according to any one of the preceding claims, wherein the frame (12) comprises at least one anchoring element (22) for anchoring in the sand, for example a post provided with a helical screw spline.

7. A beach cart (10) according to any one of the preceding claims, comprising at least one electrical equipment unit, and a battery power pack for powering the electrical equipment unit.

8. A beach cart (10) according to claim 7, comprising at least one solar panel for recharging the battery.
